(19) Europäisches Patentamt

European Patent Office

Office européen des brevets

(11) Veröffentlichungsnummer: **0 374 698**
**A2**

(12) **EUROPÄISCHE PATENTANMELDUNG**

(21) Anmeldenummer: **89122941.1**

(22) Anmeldetag: **12.12.89**

(51) Int. Cl.⁵: **B60R 19/56, B60R 21/34**

(30) Priorität: **23.12.88 DE 3843530**

(43) Veröffentlichungstag der Anmeldung:
**27.06.90 Patentblatt 90/26**

(84) Benannte Vertragsstaaten:
**AT BE CH ES FR GB GR IT LI LU NL SE**

(71) Anmelder: **Nagel, Peter**
**Schulstrasse 14**
**D-5780 Bestwig-Ramsbeck(DE)**

(72) Erfinder: **Nagel, Peter**
**Schulstrasse 14**
**D-5780 Bestwig-Ramsbeck(DE)**

(74) Vertreter: **Pürckhauer, Rolf, Dipl.-Ing.**
**Friedrich-Ebert-Strasse 27 Postfach 10 09 28**
**D-5900 Siegen 1(DE)**

(54) Eindringschutz für einen aus einem Zugfahrzeug und einem Anhänger bestehenden Lastzug.

㉗ Verkehrsunfälle, an denen Lastzüge beteiligt sind, haben sehr oft dann schwere Personen- und Sachschäden zur Folge, wenn ein Personenwagen, ein Motorradfahrer oder ein Fahrradfahrer in den Bereich der Anhängerdeichsel zwischen Zugmaschine und Anhänger fährt. Aus diesem Grund soll die Unfallsicherheit bei Lastzügen verbesser werden.

Der für Lastzüge bestimmte Eindringschutz besteht aus beidseitig an der Anhängerdeichsel (3) angeordneten, mit derselben schwenkbaren Abweisern (4, 5) zur Abschirmung der Vorderräder (8, 9) und der Freiräume (6, 7, 10) zwischen den Vorderrädern (8, 9) des Anhängers (1) und der Deichsel (3) sowie unterhalb und oberhalb der Deichsel.

Die Abweiser (4, 5) können an allen auf dem Markt befindlichen Anhängertypen angebaut werden.

Fig. 1

EP 0 374 698 A2

## Eindringschutz für einen aus einem Zugfahrzeug und einem Anhänger bestehenden Lastzug

Die Erfindung betrifft einen Eindringschutz für einen aus einem Zugfahrzeug und einem Anhänger bestehenden Lastzug.

Aus der DE 35 03 656 A1 und der DE 28 23 951 C2 ist ein den Freiraum zwischen den Achsen eines Nutzfahrzeugs an beiden Fahrzeugseiten abdeckender, entfernbarer Eindringschutz bekannt, der Verkehrsteilnehmer, insbesondere Motorrad- und Fahrradfahrer sowie Fußgänger, an einem Eindringen in den Freiraum hindert.

Die DE 28 23 951 C2 beschreibt ferner einen derartigen, für einen Sattelschlepper bestimmten Eindringschutz, der den Bereich zwischen den Hinterachsen der Zugmaschine und den Hinterachsen des Aufliegers abdeckt.

Verkehrsunfälle, an denen Lastzüge beteiligt sind, haben sehr oft dann schwere Personen- und Sachschäden zur Folge, wenn ein Personenwagen, ein Motorradfahrer oder ein Fahrradfahrer in den Bereich der Anhängerdeichsel zwischen Zugfahrzeug und Anhänger fährt. Bei derartigen Unfällen unterliegen Motorrad- und Fahrradfahrer der Gefahr, zwischen den Vorderrädern und der Deichsel des Anhängers eingeklemmt zu werden oder unter die Vorderräder zu geraten und dadurch schwerste Verletzungen ggf. sogar mit Todesfolge zu erleiden.

Der Erfindung liegt die Aufgabe zugrunde, die Unfallsicherheit bei Lastzügen zu verbessern.

Diese Aufgabe wird erfindungsgemäß gelöst durch einen Eindringschutz für Lastzüge mit den Merkmalen des Patentanspruchs 1.

Die Unteransprüche enthalten zweckmäßige Weiterbildungen der Erfindung.

Durch die beidseitig an der Anhängerdeichsel eines Lastzuges angeordneten Abweiser wird ein wirksamer Unterfahrschutz geschaffen und dadurch die Unfallsicherheit bei Lastzügen verbessert. Ferner wird durch die Abweiser eine aerodynamisch günstigere Form des Anhängers und damit eine Verringerung des Luftwiderstandsbeiwerts erreicht, die zu einem Minderverbrauch an Kraftstoff führt.

Die Erfindung ist nachstehend anhand von zwei in der Zeichnung schematisch dargestellten Ausführungsbeispielen näher erläutert. Es zeigt

Fig. 1 die Draufsicht des Fahrwerks eines Anhängers mit einer ersten Ausführungsform der Abweiser und

Fig. 2 eine der Fig. 1 entsprechende Draufsicht mit einer zweiten Ausführungsform der Abweiser.

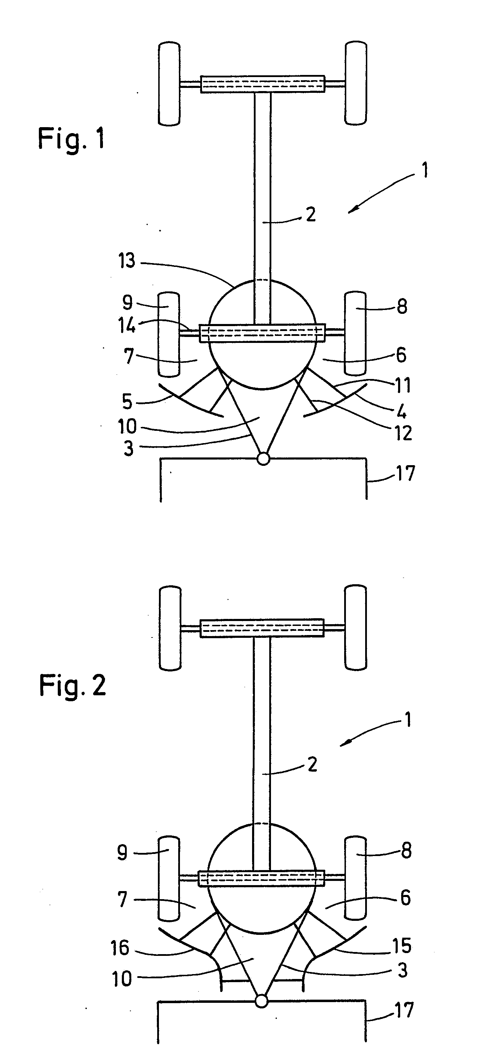

Bei dem Fahrwerk 2 eines Anhängers 1 eines Lastzuges nach Fig. 1 sind an beiden Seiten der Anhängerdeichsel 3 Abweiser 4 und 5 angeordnet, die die Freiräume 6, 7 zwischen den Vorderrädern 8 und 9 und der Deichsel 3 und den rückwärtigen Bereich des Freiraumes 10 unterhalb und oberhalb der Deichsel sowie die Vorderräder 8 und 9 abschirmen.

Die Abweiser 4 und 5 sind als leicht gewölbte Platten aus Kunststoff oder Blech ausgebildet, deren Wölbung im montierten Zustand nach außen weist.

Die Abweiser 4 und 5 sind mittels Tragarmen 11 und 12 an der Anhängerdeichsel 3 und dem mit der Deichsel verbundenen Drehschemel 13 der Vorderachse 14 des Fahrwerkes 2 des Anhängers 1 befestigt.

Die Abweiser 4 und 5 werden derart befestigt, daß sie lotrecht ausgerichtet sind und eine ausreichende Bodenfreiheit aufweisen. Um die Montage der Abweiser 4 und 5 an den verschiedenen auf dem Markt befindlichen Anhängerfabrikaten zu erleichtern, können diese an den Tragarmen 11 und 12 schwenkbar und feststellbar angebracht sein, und es besteht die Möglichkeit, die Tragarme 11 und 12 stufenlos oder stufenweise längenverstellbar auszubilden.

Bei der in Fig. 2 dargestellten Ausführungsform der Abweiser 15 und 16 schirmen diese die Vorderräder 8 und 9, die Freiräume 6, 7 zwischen den Vorderrädern 8 und 9 und der Anhängerdeichsel 3 und den Freiraum 10 unterhalb und oberhalb der Deichsel vollkommen ab.

Beim Einschlagen der Vorderräder 8 und 9 des Anhängers 1 schwenken die Abweiser 4 und 5 bzw. 15 und 16 mit den Rädern mit, so daß die unfallgefährlichen Freiräume 6,7 und 10 zwischen dem Zugfahrzeug 17 und dem Anhänger 1 des Lastzuges und die Vorderräder 8 und 9 in allen Fahrsituationen durch die Abweiser abgeschirmt werden.

## Ansprüche

1. Eindringschutz für einen aus einem Zugfahrzeug und einem Anhänger bestehenden Lastzug, gekennzeichnet durch beidseitig an der Anhängerdeichsel (3) angeordnete, mit derselben schwenkbare Abweiser (4 und 5 bzw. 15 und 16) zur Abschirmung der Vorderräder (8 und 9) des Anhängers (1) und der Freiräume (6,7 und 10) zwischen den Vorderrädern (8 und 9) und der Deichsel (3) sowie unterhalb und oberhalb der Deichsel (3) des Anhängers (1).

2. Eindringschutz nach Anspruch 1, dadurch gekennzeichnet, daß die Abweiser (4 und 5 bzw. 15 und 16) an der Deichsel (3) und/oder dem mit der Deichsel (3) verbundenen Drehschemel (13) der Vorderachse (14) des Anhängerfahrwerkes (2) befestigt sind.

3. Eindringschutz nach Anspruch 2, gekennzeichnet durch eine Befestigung der Abweiser (4 und 5 bzw. 15 und 16) an der Deichsel (3) und/oder an dem Drehschemel (13) mittels eines oder mehrerer Tragarme (11 und 12).

4. Eindringschutz nach Anspruch 3, gekennzeichnet durch eine schwenk- und feststellbare Anbringung der Abweiser (4 und 5 bzw. 15 und 16) an den Tragarmen (11 und 12).

5. Eindringschutz nach Anspruch 3 und 4, gekennzeichnet durch Tragarme (11 und 12) für die Abweiser (4 und 5 bzw. 15 und 16) mit stufenloser oder stufenweiser Längenverstellbarkeit.

6. Eindringschutz nach einem der Ansprüche 1 bis 5, gekennzeichnet durch eine lotrechte Ausrichtung der Abweiser (4 und 5 bzw. 15 und 16).

7. Eindringschutz nach einem der Ansprüche 1 bis 6, dadurch gekennzeichnet, daß die Abweiser (4 und 5 bzw. 15 und 16) als leicht gewölbte Platten ausgebildet sind, deren Wölbung nach außen weist.

8. Eindringschutz nach einem der Ansprüche 1 bis 7, dadurch gekennzeichnet, daß die Abweiser (4 und 5 bzw. 15 und 16) den rückwärtigen Bereich des Freiraumes (10) unterhalb und oberhalb der Deichsel (3) abdecken.

9. Eindringschutz nach einem der Ansprüche 1 bis 7, gekennzeichnet durch eine vollkommene Abschirmung des Freiraumes (10) unterhalb und oberhalb der Deichsel (3) durch die Abweiser (4 und 5 bzw. 15 und 16).

10. Eindringschutz nach einem der Ansprüche 1 bis 9, dadurch gekennzeichnet, daß die Abweiser (4 und 5 bzw. 15 und 16) aus Kunststoff bestehen.

11. Eindringschutz nach einem der Ansprüche 1 bis 9, dadurch gekennzeichnet, daß die Abweiser (4 und 5 bzw. 15 und 16) aus Blech hergestellt sind.

Fig. 1

Fig. 2